# EUROPÄISCHE PATENTSCHRIFT

(11) **EP 2 908 014 B1**
(45) Veröffentlichungstag und Bekanntmachung des Hinweises auf die Patenterteilung: **12.06.2019**
(21) Anmeldenummer: 14000527.3
(22) Anmeldetag: 13.02.2014
(51) Int. Cl.: F16B 1/00

(54) **Schraube**
Screw
Vis

(43) Veröffentlichungstag der Anmeldung: 19.08.2015
(73) Patentinhaber: HALFEN GmbH, 40764 Langenfeld (DE)
(72) Erfinder: Kirchner, Georg, 40719 Solingen (DE)
(74) Vertreter: Wasmuth, Rolf

(56) Entgegenhaltungen:
- EP-A2- 2 058 530
- DE-U1- 29 700 737
- DE-U1-202006 008 622
- US-A1- 2002 102 148

## Beschreibung

Die Erfindung betrifft eine Schraube der im Oberbegriff des Anspruchs 1 angegebenen Gattung.

Aus der DE 297 00 737 U1 geht eine gattungsgemäße Schraube hervor. An der Stirnseite des Schafts der Schraube ist eine keilförmige Markierung vorgesehen, die als Drehwinkelmarkierung während des Montagevorgangs dient.

Aus der EP 2 058 530 A2 geht eine Schraube hervor, deren Schaft an seiner Stirnseite laserlesbare Markierungen aufweist. Die laserlesbaren Markierungen sind dazu vorgesehen, über den Laser eines Werkzeugs ausgelesen zu werden.

Aus der US 2002/0102148 A1 geht ein Nagel hervor, auf dessen Kopf ein Relief angeordnet ist. Zusätzlich können Farbmarkierungen vorgesehen sein. Das Relief und die Markierung dienen dazu, die Länge des Nagels anzugeben, da diese nach dem Einbauen nicht mehr erkennbar ist.

Aus der DE 20 2006 008 622 U1 geht eine Schraube hervor, deren Schraubenkopf ein geometrisches Muster auf dem stirnseitigen Rand um eine Mehrkant-Innenaufnahme trägt.

Es ist bekannt, am Schraubenkopf einer Schraube Kenndaten der Schraube, wie beispielsweise die Festigkeitsklasse, die Materialgüte, den Schraubentyp, das Herstellerkennzeichen oder dgl., anzugeben. Anhand der Kenndaten ist feststellbar, ob die Schraube in technischer Hinsicht den Vorgaben einer technischen Konstruktion entspricht und damit in der Konstruktion verbaut werden kann.

Nach dem Verbauen der Schraube in der Konstruktion kann oftmals der Schraubenkopf nicht mehr eingesehen werden. Dies hat den Nachteil, dass nach Verbauen der Schraube in der Konstruktion nicht mehr festgestellt werden kann, ob die montierte Schraube in technischer Hinsicht den Vorgaben der technischen Konstruktion entspricht. Bei Verwendung von Schrauben, die nicht den Vorgaben der technischen Konstruktion entsprechen, kann die Konstruktion versagen.

Eine nachträgliche Feststellung der technischen Eignung der in der technischen Konstruktion montierten Schraube ist beispielsweise erforderlich, wenn ein Sachverständiger technisch prüfen soll, ob die Konstruktion in technischer Hinsicht den Bauvorgaben entspricht. Wenn die Schraube in der technischen Konstruktion jedoch so verbaut ist, dass die am Kopf der verbauten Schraube angebrachten Kenndaten nicht sichtbar sind, so kann der Sachverständige auch nicht feststellen, ob die für die Konstruktion vorgesehene Schraube montiert wurde. Damit kann der Sachverständige nicht feststellen, ob die Konstruktion den technischen Vorgaben entspricht.

Der Erfindung liegt die Aufgabe zugrunde, eine Schraube der gattungsgemäßen Art derart weiterzubilden, dass nach Montieren der Schraube in eine technische Konstruktion festgestellt werden kann, ob die verbaute Schraube in technischer Hinsicht den Vorgaben der Konstruktion entspricht.

Diese Aufgabe wird durch eine Schraube mit den Merkmalen des Anspruchs 1 gelöst. Gemäß der Erfindung umfasst die Schraube einen Kopf und einen am Kopf festgelegten Schaft, wobei der Schaft eine dem Kopf abgewandte Stirnseite umfasst. Auf der Stirnseite des Schafts sind eine Basisfläche und ein Relief ausgebildet, wobei das Relief mindestens teilsweise plastisch aus der Basisfläche ausgeformt ist. Die Stirnseite ist teilweise eingefärbt.

Aus dem auf der Stirnseite des Schafts angebrachten Relief und aus der teilweise farbigen Ausführung der Stirnseite können Rückschlüsse auf die Kenndaten der Schraube, wie beispielsweise die Festigkeitsklasse der Schraube, die Materialgüte der Schraube, der Schraubentyp, der Schraubenhersteller oder dgl., gezogen werden. Diese Rückschlüsse auf die Kenndaten der Schraube können immer dann gezogen werden, wenn die Stirnseite des Schafts der montierten Schraube sichtbar, und damit das dort ausgebildete Relief und die farbige Ausführung der Stirnseite sichtbar sind. Der Kopf der verbauten Schraube muss hierbei nicht einsehbar sein. Sobald die Stirnseite der eingebauten Schraube erkennbar ist, kann ein Sachverständiger anhand des Reliefs und anhand der farbigen Ausführung der Stirnseite der Schraube jederzeit feststellen, ob die Schraube in technischer Hinsicht den technischen Vorgaben der Konstruktion entspricht.

Gemäß der Erfindung steht das Relief ausschließlich über die Basisfläche über. Durch das Überstehen des Reliefs über die Basisfläche besitzt das Relief eine dreidimensionale Struktur. Durch diese dreidimensionale Struktur des Reliefs bleibt das Relief über lange Zeiträume, insbesondere auch unter Umweltbelastungen, die beispielsweise zu Korrosion führen und eine farbliche Kennzeichnung eliminieren können, dauerhaft erkennbar. Zusätzlich ist durch die dreidimensionale Struktur des Reliefs eine Manipulation des Reliefs an der montierten Schraube durch Dritte erschwert. Dadurch kann sicher gewährleistet werden, dass das Relief in Kombination mit der farblichen Ausführung der Stirnseite des Schafts der Schraube die Kenndaten der Schraube wiedergibt.

Vorteilhaft umfasst das Relief mindestens eine geometrische Figur, und die Figur besitzt vorzugsweise einen Abstand zur Basisfläche. Eine solche Figur kann beispielsweise ein Dreieck, ein Quadrat, ein Rechteck, ein Vieleck, ein Kreis, oder dgl. sein. Zweckmäßig wird jeder Figur in Kombination mit der farblichen Ausführung der Stirnseite mindestens ein Kenndatum zugeordnet, insbesondere steht eine geometrische Figur für eine Eigenschaft der Schraube. Beispielsweise kann ein Kreis das verwendete Material der Schraube, beispielsweise Stahl, symbolisieren, ein Rechteck kann beispielsweise die Festigkeitsklasse symbolisieren oder dergleichen. Anhand der im Relief ausgebildeten geometrischen Figur und anhand der farblichen Ausgestaltung der Stirnseite kann ein Sachverständiger damit erkennen, welche technischen Kenndaten die Schraube besitzt. Daraus kann der Sachverständige ableiten, ob die verbaute Schraube in technischer Hinsicht den Vorgaben der Konstruktion entspricht.

Vorteilhaft ist die geometrische Figur ein Rechteck, wobei eine Seite des Rechtecks mittig offen ist. Damit gibt das Relief an, dass die Schraube für eine Ankerschiene oder Halfenschiene vorgesehen ist. Vorteilhaft beträgt der größte Abstand der Figur zur Basisfläche mindestens 1 mm und höchstens 4 mm, insbesondere mindestens 2 mm und höchstens 3 mm. Damit sind das Relief und insbesondere die im Relief abgebildete Figur an der Stirnseite des Schafts der Schraube gut erkennbar. Auch kann damit die Schraube technisch einfach gefertigt werden.

Vorzugsweise umfasst das Relief mindestens einen plastisch ausgebildeten, geometrischen Körper. Ein solcher Körper ist beispielsweise ein Quader, ein Würfel, eine Pyramide, ein Prisma oder dergleichen.

Das Relief umfasst zweckmäßig einen plastisch ausgebildeten Buchstaben. Beispielsweise kann der Buchstabe ein "H" sein. Zweckmäßig umfasst das Relief mindestens ein Satzzeichen, insbesondere einen Bindestrich, einen Punkt, ein Komma, ein Semikolon, einen Doppelpunkt oder dergleichen. Vorteilhaft umfasst das Relief mindestens eine plastisch ausgebildete Zahl. Dadurch sind im Relief Schriftzeichen abgebildet, die Aufschluss über die technischen Eigenschaften der Schraube geben. Durch die Kombination von Buchstaben, Zahlen und Satzzeichen kann die technische Information über die technischen Eigenschaften der Schraube auf einfache Weise an der Schraube angebracht werden.

Gemäß der Erfindung ist ausschließlich das Relief eingefärbt. Dadurch ist der Kontrast zwischen eingefärbtem und nicht eingefärbtem Bereich an der Schraube groß. Zusätzlich ist durch die nur lokale Einfärbung der Schraube an der Stirnseite oder insbesondere nur am Relief nur wenig Farbe aufgetragen, da die Farbe nur an der später sichtbaren Stelle der Schraube, nämlich an der Stirnseite des Schafts, aufgebracht ist.

Vorzugsweise ist der Kopf der Schraube als Hammerkopf ausgebildet. Zweckmäßig kann der Kopf der Schraube auch als Hakenkopf ausgebildet sein. Schrauben mit einem Hammerkopf oder mit einem Hakenkopf eignen sich aufgrund der rechteckförmigen Kopfgeometrie, durch eine schmale Bohrung in einen Befestigungsträger eingeführt zu werden. Nach Einführen der Schraube in den Befestigungsträger ist der Kopf der Schraube vom Befestigungsträger weitgehend umschlossen, und der Kopf ist nicht mehr sichtbar. Die Stirnseite des Schafts der Schraube ist jedoch einsehbar. Über das auf der Stirnseite ausgebildete Relief sowie durch die farbliche Ausführung der Stirnseite können auch nach der Montage der Schraube in einem Befestigungsträger die Kenndaten der Schraube festgestellt werden.

Ausführungsbeispiele der Erfindung werden im Folgenden anhand der Zeichnungen erläutert. Es zeigen:
- Fig. 1 und 2: perspektivische Ansichten der Schraube mit einem Schaft im unverbauten und im montierten Zustand in einer technischen Konstruktion,
- Fig. 3 bis 7: Draufsichten auf die Stirnseite des Schafts der Schraube mit verschiedenen Ausführungsvarianten eines Reliefs,
- Fig. 8 bis 10: schematische Schnittdarstellungen der Schraube mit dem Relief an der Stirnseite des Schafts der Schraube in verschiedenen Ausführungsvarianten, wobei die in den Figuren 9 und 10 gezeigten Schrauben nicht unter die beanspruchte Erfindung fallen,
- Fig. 11 und 12: Seitenansichten der Schraube mit Hammerkopf und Hakenkopf und einem jeweils zugehörigen Befestigungsträger,
- Fig. 13: eine schematische Draufsicht auf die Stirnseite und auf den Kopf der Schraube,
- Fig. 14 und 15: perspektivische Ansichten der Schraube im unverbauten und im montierten Zustand in einer weiteren Ausführungsvariante einer technischen Konstruktion.

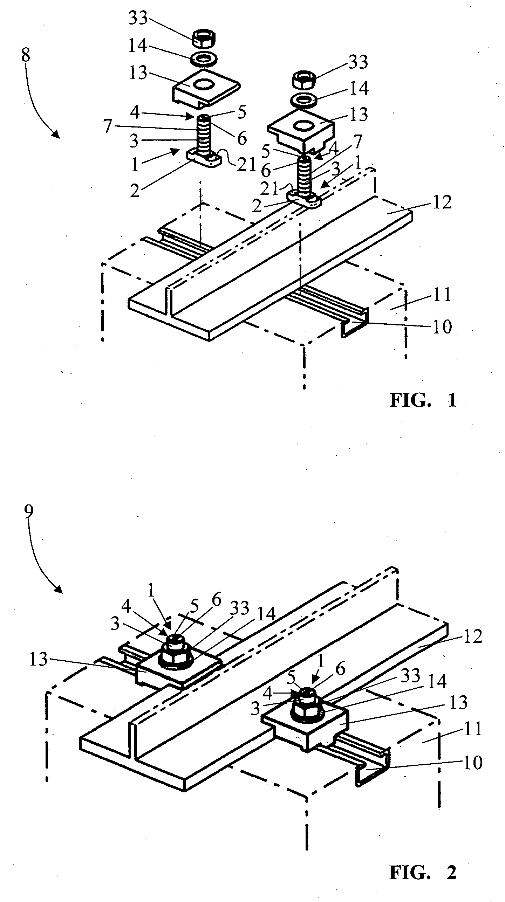

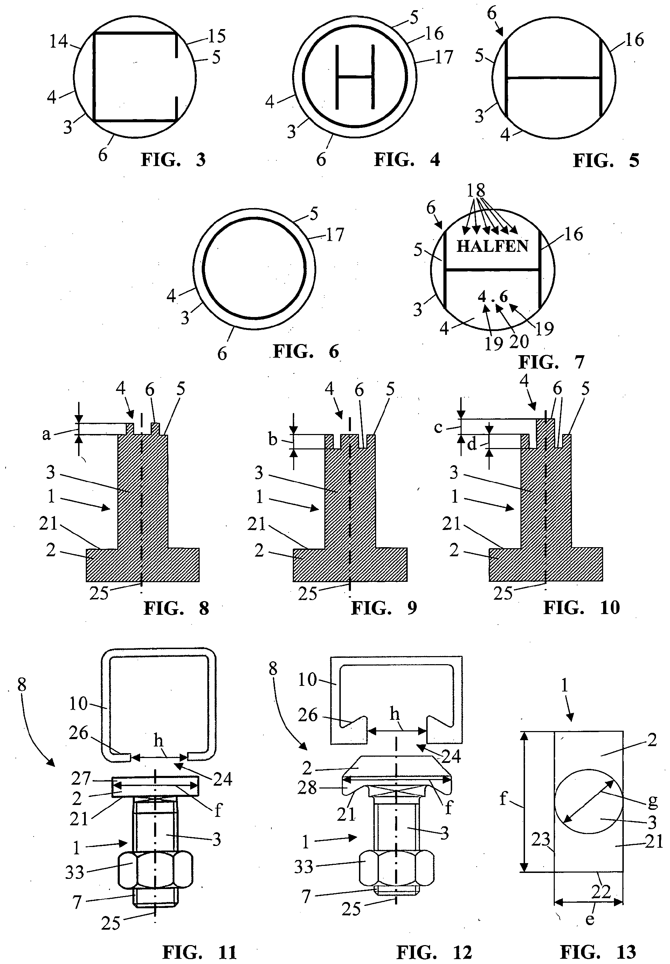

Fig. 1 zeigt als Ausführungsbeispiel eine Schraube 1 im unverbauten Zustand 8 sowie einen an einem Bauelement 11 festgelegten Befestigungsträger 10. Die Schraube 1 umfasst einen Kopf 2. Am Kopf 2 ist ein Schaft 3 angeordnet. Der Schaft 3 umfasst eine dem Kopf 2 abgewandte Stirnseite 4. An der Stirnseite 4 sind, wie in den Fig. 8 bis 10 gezeigt, eine Basisfläche 5 und ein Relief 6 ausgebildet. Das Relief 6 ist teilweise plastisch aus der Basisfläche 5 ausgeformt. Die Stirnseite 4 ist teilweise farbig ausgeführt.

Die Fig. 1 zeigt ein Ausführungsbeispiel einer technischen Konstruktion, in welcher die Schraube 1 verbaut ist. Die technische Konstruktion umfasst den Befestigungsträger 10. Der Befestigungsträger 10 ist an dem Bauelement 11 festgelegt. Der Befestigungsträger 10 ist so ausgebildet, dass sich der Kopf 2 der Schraube 1 im Befestigungsträger 10 abstützen kann. Hierbei befindet sich der Kopf 2 der Schraube 1 im montierten Zustand 9 weitestgehend innerhalb des Befestigungsträgers 10 (Fig. 2). Durch das Abstützen des Kopfs 2 der Schraube 1 im Befestigungsträger 10 können Kräfte zwischen der Schraube 1 und dem Befestigungsträger 10 übertragen werden. Im Ausführungsbeispiel ist der Befestigungsträger 10 als Schiene, nämlich als Ankerschiene oder Halfenschiene, ausgebildet. Der Befestigungsträger 10 kann auch als Montageplatte ausgeführt sein.

Die technische Konstruktion umfasst einen Stahlträger 12. Der Stahlträger 12 liegt im Ausführungsbeispiel quer zum Befestigungsträger 10 auf dem Bauelement 11 auf. Im Ausführungsbeispiel nach den Fig. 1 und 2 werden zur Befestigung des Stahlträgers 12 auf dem Befestigungsträger 10 und dem Bauelement 11 zwei identisch aufgebaute Schraubverbindungen verwendet. Mithilfe der Schraubverbindungen ist der Stahlträger 12 fest mit dem Bauelement 11 verbunden. Jede Schraubverbindung umfasst neben der Schraube 1 eine Klemmplatte 13. Im montierten Zustand 9 liegt die Klemmplatte 13 sowohl auf dem Stahlträger 12 als auch auf dem Befestigungsträger 10 auf. Die Klemmplatte 13 ist über die Schraube 1, über eine Unterlegscheibe 14 und über eine auf das Gewinde 7 der Schraube 1 aufgeschraubte Mutter 33 mit dem Befestigungsträger 10 fest verschraubt. Die Klemmplatte 13 klemmt im montierten Zustand 9 den Stahlträger 12 auf den Befestigungsträger 10 fest.

Das Bauelement 11 kann ein Gebäudeteil, beispielsweise eine Wand, eine Decke, ein Boden, ein Fundament oder dgl. umfassen. Der Befestigungsträger 10 ist in das Gebäudeteil eingelassen. Der Befestigungsträger 10 und das Gebäudeteil sind fest miteinander verbunden. Durch die Schraubverbindung mit Schraube 1 und Klemmplatte 13 ist der Stahlträger 12 damit fest mit dem Gebäudeteil verbunden, und es können Kräfte zwischen Stahlträger 12 und Gebäudeteil übertragen werden. Um über die Schraubverbindung Kräfte zwischen dem Stahlträger 12 und dem Bauelement 11 und dem Befestigungsträger 10 übertragen zu können, muss die Schraubverbindung in technischer Hinsicht Vorgaben der technischen Konstruktion erfüllen. Ein wesentlicher Bestandteil der Schraubverbindung und damit ein wesentlicher Bestandteil zur Erfüllung der technischen Vorgaben der Schraubverbindung ist hierbei die Schraube 1.

Die Schraube 1 muss in technischer Hinsicht den Vorgaben der technischen Konstruktion entsprechen. Auf dem Kopf 2 der Schraube 1 sind - in den Figuren nicht dargestellte - Kenndaten eingeprägt. Die auf dem Kopf 2 aufgebrachten Kenndaten geben beispielsweise den Hersteller, die Festigkeitsklasse bzw. die Materialgüte, den Schraubentyp, und dergleichen, an. Während der Kopf 2 der Schraube 1 im unverbauten Zustand 8 nach Fig. 1 sichtbar ist, ist im montierten Zustand 9 nach Fig. 2 der Kopf 2 der Schraube 1 nicht sichtbar. Im montierten Zustand 9 können also die am Kopf 2 aufgebrachten Kenndaten nicht eingesehen werden. Gerade im montierten Zustand 9 muss allerdings feststellbar sein, ob die Schraube 1 in technischer Hinsicht den Vorgaben der technischen Konstruktion entspricht. Beispielsweise muss ein Sachverständiger die Konstruktion im montierten Zustand 9 technisch beurteilen, prüfen und abnehmen können. Hierzu muss der Sachverständige jederzeit in der Lage sein festzustellen, ob die Schraube in technischer Hinsicht den Vorgaben der Konstruktion entspricht.

Im montierten Zustand 9 ist nach dem Ausführungsbeispiel nach Fig. 2 die Stirnseite 4 des Schafts 3 der Schraube einsehbar. Damit ist auch das auf der Stirnseite 4 ausgebildete Relief 6 und die farbige Ausführung der Stirnseite 4 sichtbar. Das Relief 6 und die farbige Ausführung der Stirnseite 4 geben technische Kenndaten der Schraube an. Somit kann der Sachverständige anhand des Reliefs 6 und anhand der farbigen Ausgestaltung der Stirnseite 4 auch im montierten Zustand 9 feststellen, ob die Schraube in technischer Hinsicht den Vorgaben der Konstruktion entspricht.

Verschiedene Ausführungsbeispiele von Reliefs 6 sind in den Fig. 3 bis 7 gezeigt. Unterschiedliche Reliefs 6 geben unterschiedliche Kenndaten der Schraube 1 wieder. Ein Relief 6 kann hierbei beispielsweise eine geometrische Figur umfassen. Die geometrische Figur wiederum gibt Rückschlüsse auf den Hersteller, die Materialgüte, die Festigkeitsklasse, den Schraubentyp und dergleichen.

Im Ausführungsbeispiel nach Fig. 3 ist als geometrische Figur ein Rechteck 14 ausgebildet, wobei die rechte Seite 15 des Rechtecks 14 mittig offen ist. Die geometrische Figur gibt beispielsweise den Hersteller an. Außerdem gibt die geometrische Figur den Verwendungszweck der Schraube 1 an, nämlich dass die Schraube 1 in eine Ankerschiene oder Halfenschiene verbaut werden kann.

Im Ausführungsbeispiel nach Fig. 4 ist ein plastisch ausgebildetes "H" 16 im Relief 6 umfasst. Das "H" 16 gibt beispielsweise den Hersteller oder den Verwendungszweck der Schraube 1 an. Des Weiteren umfasst das Relief 6 im Ausführungsbeispiel nach Fig. 5 einen Kreis 17. Der Mittelpunkt des Kreises 17 ist an derselben Stelle angeordnet wie der Mittelpunkt der in Draufsicht kreisförmigen Stirnseite 4. Der Kreis 17 gibt beispielsweise die Festigkeitsklasse der Schraube 1 an. Im Ausführungsbeispiel nach Fig. 5 umfasst das Relief 6 das "H" 16. Im Ausführungsbeispiel nach Fig. 6 umfasst das Relief 6 den Kreis 17.

Im Ausführungsbeispiel nach Fig. 7 besitzt das Relief 6 mehrere Buchstaben 18. Die Buchstaben 18 ergeben den Schriftzug "HALFEN". Die Buchstabenkombination "HALFEN" gibt einen Hinweis auf den Hersteller. Des Weiteren besitzt das Relief 6 Zahlen 19 und Satzzeichen 20. Im Ausführungsbeispiel ist im Relief 6 die Zahlenkombination "4.6" angegeben. Die Zahlenkombination "4.6" gibt einen Hinweis auf die Festigkeitsklasse der Schraube 1. Zusätzlich besitzt das Relief 6 im Ausführungsbeispiel nach Fig. 7 das "H" 16.

In weiteren Ausführungsvarianten kann das Relief 6 mindestens einen plastisch ausgebildeten, geometrischen Körper umfassen. Beispiele für solch einen plastisch ausgebildeten geometrischen Körper sind ein Quader, ein Würfel, eine Pyramide, ein Prisma oder dergleichen.

In sämtlichen Varianten ist die Stirnseite 4 der Schraube 1 eingefärbt. Es ist vorteilhaft, ausschließlich die Stirnseite 4 der Schraube 1 einzufärben, da die Stirnseite 4 im montierten Zustand 9 sichtbar ist. Ein komplettes Einfärben der Schraube 1 ist nicht erforderlich, insbesondere sind nicht sichtbare Teile der Schraube 1, beispielsweise der Kopf 2, im Ausführungsbeispiel nicht eingefärbt. Gemäß der Erfindung ist nur das Relief 6 eingefärbt. Auch können gemäß einer nicht erfindungsgemäßen Variante das Relief 6 und die Basisfläche 5 eingefärbt sein, wobei das Relief 6 eine andere Farbe trägt wie die Farbe der Basisfläche 5. Die Verwendung von nur einer Farbe, von mehreren Farben, von Farbkombinationen oder dergleichen, geben Kenndaten der Schraube 1 an. Hieraus kann ein Sachverständiger ablesen, um welche Schraube 1 es sich handelt und ob die Schraube 1 in technischer Hinsicht den Vorgaben der Konstruktion entspricht.

Durch die Ausgestaltung des Reliefs 6 an der Stirnseite 4 der Schraube 1 mit geometrischen Figuren, geometrischen Körpern, Buchstaben 18, Zahlen 19, Satzzeichen 20, und mit einer farblichen Ausgestaltung der Stirnseite 4 sind mehrere Kenndaten der Schraube 1 im Relief 6 abgebildet. Trotz der begrenzten Größe der Stirnseite 4 der Schraube 1 können mithilfe des Reliefs 6 mehrere Kenndaten an der Stirnseite 4 der Schraube 1 aufgebracht werden.

Wie in den Fig. 8 bis 10 gezeigt, ist das Relief 6 mindestens teilweise plastisch aus der Basisfläche 5 ausgeformt. Damit erhält das Relief 6 eine dreidimensionale Struktur. Die dreidimensionale Struktur der Reliefs 6 bleibt auch unter Umwelteinflüssen wie Verwitterung oder dgl. dauerhaft gut sichtbar. Im Ausführungsbeispiel nach Fig. 8 steht das Relief 6 ausschließlich über die Basisfläche 5 über. Das Relief 6 besitzt damit stellenweise einen Abstand zur Basisfläche 5, nämlich eine Erhebung mit Höhe a.

Im Beispiel nach Fig. 9 ist das Relief 6 ausschließlich in die Basisfläche 5 eingelassen. Das Relief 6 besitzt damit stellenweise einen Abstand zur Basisfläche 5, nämlich eine Senkung mit Tiefe b.

Im Beispiel nach Fig. 10 steht das Relief 6 stellenweise mit einem Abstand, nämlich mit einer Erhebung mit Höhe c, über der Basisfläche 5 über, und das Relief 6 ist stellenweise mit einem Abstand, nämlich mit einer Senkung mit Tiefe d, in die Basisfläche 5 eingelassen.

Bei sämtlichen Beispielen nach den Fig. 8 bis 10 beträgt der größte Abstand (a, b, c, d) des Reliefs 6 zur Basisfläche 5 etwa 3 mm. Es kann vorteilhaft sein, dass der größte Abstand (a, b, c, d) des Reliefs 6 zur Basisfläche 5 mindestens 1 mm und höchstens 4 mm, insbesondere mindestens 2 mm und höchstens 3 mm, beträgt.

In den Fig. 11 und 12 sind zwei mögliche Ausführungsvarianten der Kopfform des Kopfs 2 der Schraube 1 und den dazu gehörenden Befestigungsträgern 10 gezeigt. Der Kopf 2 besitzt in beiden Ausführungsvarianten eine Unterseite 21. An der Unterseite 21 ist der Schaft 3 angeformt. Wie in den Fig. 1 und 13 erkennbar, ist die Unterseite 21 in Draufsicht etwa rechteckförmig. Die rechteckförmige Unterseite 21 besitzt eine erste Seite 22 und eine orthogonal dazu stehende zweite Seite 23. Die erste Seite 22 besitzt die Seitenlänge e, die zweite Seite 23 besitzt die Seitenlänge f. Die Seitenlänge e der ersten Seite 22 ist kleiner als die Seitenlänge f der zweiten Seite 23. Im Ausführungsbeispiel ist die Seitenlänge e der ersten Seite 22 in etwa so groß wie der äußere Durchmesser g des Schafts 3.

Der Befestigungsträger 10 besitzt eine Öffnung 24 mit einer Breite h. Die Breite h ist größer als die Seitenlänge e der ersten Seite 22 und kleiner als die Seitenlänge f der zweiten Seite 23. Durch die kürzere Seitenlänge e der ersten Seite 22 im Vergleich zur längeren Seitenlänge f der zweiten Seite 23 kann die Schraube 1 so gedreht werden, dass die Schraube 1 in die in den Fig. 11 und 12 gezeigte Öffnung 24 des Befestigungsträgers 10 eingeführt werden kann. Nach Einführen der Schraube 1 in den Befestigungsträger 10 wird die Schraube 1 um etwa 90° um die in den Fig. 11 und 12 gezeigte Symmetrieachse 25 der Schraube 1 gedreht. Da die zweite Seitenlänge 11 der Unterseite 21 des Kopfs 2 größer ist als die Breite h der Öffnung 24, ist die Schraube 1 in dieser Position innerhalb des Befestigungsträgers 10 angeordnet. Die Schraube 1 kann ohne Drehung der Schraube 1 nicht mehr aus der Öffnung 24 des Befestigungsträgers 10 entfernt werden. Im montierten Zustand 9 nach Fig. 2 liegt die Unterseite 21 auf der Innenseite 26 des Befestigungsträgers 10 auf. Damit können zwischen dem Befestigungsträger 10 und der Schraube 1 Kräfte übertragen werden. Der Kopf 2 der Schraube 1 ist im montierten Zustand 9 nicht einsehbar.

Der Kopf 2 der Schraube 1 ist im Ausführungsbeispiel nach den Fig. 1, 11 und 14 als Hammerkopf 27 ausgebildet. Der Hammerkopf 27 besitzt sowohl in Draufsicht nach Fig. 13 als auch in Seitenansicht nach Fig. 11 eine Rechteckform. Der Befestigungsträger 10, nämlich die Ankerschiene oder Halfenschiene, ist entsprechend dem Hammerkopf 27 so geformt, dass die Unterseite 21 des Kopfs 2 im montierten Zustand 9 stellenweise flach auf der Innenseite 26 des Befestigungsträgers 10 aufliegt.

In einem weiteren Ausführungsbeispiel nach Fig. 12 ist der Kopf 2 der Schraube 1 als Hakenkopf 28 ausgebildet. Der Hakenkopf 28 entspricht in Draufsicht nach Fig. 13 dem Hammerkopf 27. Der Hakenkopf 28 besitzt in Draufsicht nach Fig. 13 Rechteckform. In Seitenansicht nach Fig. 12 verläuft die Unterseite 21 des Hakenkopfs 28 vom Schaft 3 ausgehend mit einem Winkel a. Der Winkel a ist in Seitenansicht nach Fig. 12 zwischen Schaft 3 und Unterseite 21 gemessen. Der Winkel α ist kleiner als 90°. Der Befestigungsträger 10 nach Fig. 12 ist entsprechend dem Hakenkopf 28 so geformt, dass die Unterseite 21 des Hakenkopfs 28 im montierten Zustand 9 stellenweise flach auf der Innenseite 26 des Befestigungsträgers 10 aufliegt. Die Hakenform 28 verhindert ein Verrutschen der Schraube 1 im montierten Zustand 9 und unterstützt somit die Konstruktion zusätzlich.

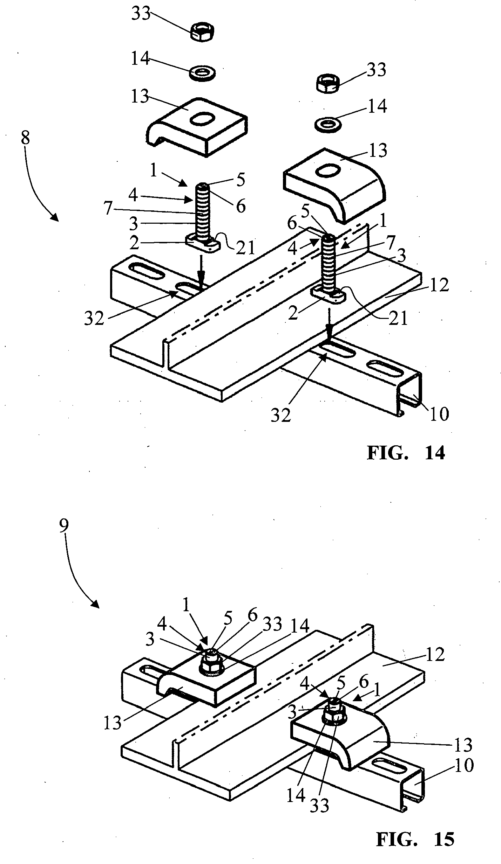

In den Fig. 14 und 15 ist ein weiteres Ausführungsbeispiel einer technischen Konstruktion, in welcher die Schraube 1 verbaut ist, gezeigt. Gleiche Bezugszeichen in sämtlichen Figuren 1 bis 15 bezeichnen gleiche Bauteile. Der Befestigungsträger 10 ist auch in diesem Ausführungsbeispiel nach den Fig. 14 und 15 als Schiene, nämlich als Ankerschiene oder Halfenschiene, ausgebildet. Am Schienenboden 31 sind Langlöcher 32 mit zwei gegenüberliegenden schmalen Seiten und zwei gegenüberliegenden langen Seiten ausgebildet. Die Länge der schmalen Seite des Langlochs 32 ist länger als die in Fig. 13 gezeigte Seitenlänge e der ersten Seite 22 des Kopfs 2 der Schraube 1 und kürzer als die Seitenlänge f der zweiten Seite 23 des Kopfs 2 der Schraube 1. Die lange Seite des Langlochs ist länger als die Seitenlänge f der zweiten Seite 23 des Kopfs 2 der Schaube 1. Damit kann der Kopf 2 der Schraube 1 in das Langloch 32 eingeführt werden. Nach Einführen des Kopfs 2 der Schraube 1 in das Langloch 32 verschwindet der Kopf 2 der Schraube 1 im montierten Zustand 9 derart im Befestigungsträger 10, dass der Kopf 2 im montierten Zustand 9 nicht einsehbar ist. Gleichwohl ist die Stirnseite 4 mit dem Relief 6 und der farbigen Ausbildung der Stirnseite 4 sichtbar (Fig. 15). Damit kann auch in diesem Ausführungsbeispiel der Konstruktion im montierten Zustand 9 der Schraube 1 anhand des Reliefs 6 und der farbigen Ausgestaltung der Stirnseite 4 des Schafts 3 der Schraube 1 erkannt werden, ob die Schraube 1 in technischer Hinsicht den Vorgaben der technischen Konstruktion entspricht.

## Patentansprüche

1. Schraube (1) mit einem Kopf (2) und einem am Kopf (2) festgelegten Schaft (3), wobei der Kopf (2) als Hammerkopf (27) oder als Hakenkopf (28) ausgebildet ist, wobei der Schaft (3) eine dem Kopf (2) abgewandte Stirnseite (4) umfasst, und wobei auf der Stirnseite (4) des Schafts (3) eine Basisfläche (5) ausgebildet ist, wobei auf der Stirnseite (4) des Schafts (3) ein Relief (6) ausgebildet ist, wobei das Relief (6) mindestens teilweise plastisch aus der Basisfläche (5) ausgeformt ist,
**dadurch gekennzeichnet, dass** die Stirnseite (4) teilweise eingefärbt ist, wobei das Relief (6) ausschließlich über die Basisfläche (5) übersteht und wobei nur das Relief (6) eingefärbt ist.

2. Schraube nach Anspruch 1,
**dadurch gekennzeichnet, dass** das Relief (6) mindestens eine geometrische Figur, insbesondere ein Dreieck, ein Quadrat, ein Rechteck (14), ein Vieleck, oder einen Kreis (17), umfasst, und dass die Figur zur Basisfläche (5) einen Abstand (a, b, c, d) besitzt.

3. Schraube nach Anspruch 2,
**dadurch gekennzeichnet, dass** die geometrische Figur ein Rechteck (14) ist, wobei eine Seite (15) des Rechtecks (14) mittig offen ist.

4. Schraube nach Anspruch 2 oder 3,
**dadurch gekennzeichnet, dass** der größte Abstand (a, b, c, d) der Figur zur Basisfläche (5) mindestens 1 mm und höchstens 4 mm, insbesondere höchstens 3 mm, beträgt.

5. Schraube nach einem der Ansprüche 1 bis 4,
**dadurch gekennzeichnet, dass** das Relief (6) mindestens einen plastisch ausgebildeten, geometrischen Körper, insbesondere einen Quader, einen Würfel, eine Pyramide, oder ein Prisma, umfasst.

6. Schraube nach einem der Ansprüche 1 bis 5,
**dadurch gekennzeichnet, dass** das Relief (6) mindestens einen plastisch ausgebildeten Buchstaben (18), insbesondere ein H (16), umfasst.

7. Schraube nach einem der Ansprüche 1 bis 6,
**dadurch gekennzeichnet, dass** das Relief (6) mindestens eine plastisch ausgebildete Zahl (19) umfasst.

## Claims

1. Screw (1) with a head (2) and a shank (3) fixed to the head (2), wherein the head (2) is designed as a hammer head (27) or as a tee head (28), wherein the shank (3) has an end face (4) remote from the head (2), and wherein a base surface (5) is formed on the end face (4) of the shank (3), wherein a relief (6) is formed on the end face (4) of the shank (3), wherein the relief (6) is at least partially plastically shaped from the base surface (5),
**characterised in that** the end face (4) is partially dyed, wherein the relief (6) exclusively projects beyond the base surface (5) and wherein only the relief (6) is dyed.

2. Screw according to claim 1,
**characterised in that** the relief (6) comprises at least one geometrical shape, in particular a triangle, a square, a rectangle (14), a polygon or a circle (17), and **in that** the shape has a distance (a, b, c, d) from the base surface (5).

3. Screw according to claim 2,
**characterised in that** the geometrical shape is a rectangle (14), one side (15) of the rectangle (14) being open at the centre.

4. Screw according to claim 2 or 3,
**characterised in that** the maximum distance (a, b, c, d) of the shape from the base surface (5) is at least 1 mm and at most 4 mm, in particular at most 3 mm.

5. Screw according to any of claims 1 to 4,
**characterised in that** the relief (6) comprises at least one plastically formed geometric body, in particular a cuboid, a cube, a pyramid or a prism.

6. Screw according to any of claims 1 to 5,
**characterised in that** the relief (6) comprises at least one plastically formed letter (18), in particular an H (16).

7. Screw according to any of claims 1 to 6,
**characterised in that** the relief (6) comprises at least one plastically formed numeral (19).

## Revendications

1. Vis (1) avec une tête (2) et une tige (3) fixée à la tête (2), dans laquelle la tête (2) est formée comme tête marteau (27) ou tête crochet (28), dans laquelle la tige (3) comprend un côté frontal (4) opposé à la tête (2) et dans laquelle une surface de base (5) est formée sur le côté frontal (4) de la tige (3), dans laquelle un relief (6) est formé sur le côté frontal (4) de la tige (3), dans laquelle le relief (6) est façonné au moins en partie plastiquement à partir de la surface de base (5), **caractérisée en ce que** le côté frontal (4) est en partie teinté, dans laquelle le relief (6) fait exclusivement saillie sur la surface de base (5) et dans laquelle seul le relief (6) est teinté.

2. Vis selon la revendication 1,
**caractérisée en ce que** le relief (6) comprend au moins une figure géométrique, en particulier un triangle, un carré, un rectangle (14), un polygone ou un cercle (17), et **en ce que** la figure présente un écartement (a, b, c, d) par rapport à la surface de base (5).

3. Vis selon la revendication 2,
**caractérisée en ce que** la figure géométrique est un rectangle (14), dans laquelle un côté (15) du rectangle (14) est ouvert au centre.

4. Vis selon la revendication 2 ou 3,
**caractérisée en ce que** l'écartement (a, b, c, d) maximal de la figure par rapport à la surface de base (5) est au minimum de 1 mm et au maximum de 4 mm, en particulier au maximum de 3 mm.

5. Vis selon l'une des revendications 1 à 4,
**caractérisée en ce que** le relief (6) comprend au moins un corps géométrique formé plastiquement, en particulier un parallélépipède, un cube, une pyramide ou un prisme.

6. Vis selon l'une des revendications 1 à 5,
**caractérisée en ce que** le relief (6) comprend au moins une lettre (18) formée plastiquement, en particulier un H (16).

7. Vis selon l'une des revendications 1 à 6,
**caractérisée en ce que** le relief (6) comprend au moins un chiffre (19) formé plastiquement.
